Europäisches Patentamt

European Patent Office

Office européen des brevets

(11) Numéro de publication: **0 280 590**
A1

## (12) DEMANDE DE BREVET EUROPEEN

(21) Numéro de dépôt: 88400135.5

(51) Int. Cl.⁴: **B 60 R 1/06**

(22) Date de dépôt: 22.01.88

(30) Priorité: 23.01.87 FR 8700796

(43) Date de publication de la demande:
31.08.88 Bulletin 88/35

(84) Etats contractants désignés:
DE ES FR GB IT NL SE

(71) Demandeur: SOCIETE MANZONI BOUCHOT
Zone Industrielle "Le Plan d'Acier" Boîte Postale No 9
F-39200 Saint-Claude (FR.)

(72) Inventeur: Manzoni, Stéphane
1, rue Pasteur
F-39200 Saint-Claude (FR.)

(74) Mandataire: Caunet, Jean et al
Cabinet BEAU DE LOMENIE 55, rue d'Amsterdam
F-75008 Paris (FR.)

(54) Rétroviseur pour véhicules divers, comportant des moyens de frottement particuliers à ses articulations.

(57) Le rétroviseur comprend un boîtier porte-miroir (2, 3) une embase fixe (9), un mécanisme de liaison interposé entre le boîtier et l'embase et comportant des moyens sélectifs de guidage en pivotement dudit boîtier suivant un axe (13) sensiblement vertical avant-arrière et respectivement un axe (12) sensiblement horizontal ciel-terre et des portées de frottement conjuguées auxdits moyens de guidage et coopérant avec un moyen élastique pour engendrer des couples de frottement résistant aux pivotements.

Suivant l'invention, le rétroviseur comporte deux ressorts distincts (37, 40) coopérant respectivement avec au moins une portée de guidage (10, 11) en pivotement ciel-terre et au moins une portée (4, 5) de guidage en pivotement avant-arrière.

Fig. 1

EP 0 280 590 A1

**Description**

**Rétroviseur pour véhicules divers, comportant des moyens de frottement particuliers à ses articulations.**

La présente invention concerne un rétroviseur pour véhicules divers, notamment pour véhicule automobile.

Ce rétroviseur est du type décrit dans le brevet français 2.569.638. Il comporte un boîtier porte-miroir prolongé par une chape entre les branches de laquelle s'étend un appendice cylindrique d'une embase fixe destinée à être montée sur le véhicule. Un mors fixe présentant deux portées de frottement qui sont respectivement l'une plane et l'autre cylindrique, est interposé entre l'appendice fixe et l'une des branches de la chape à manoeuvrer. Un mors mobile présentant deux portées de frottement qui sont respectivement l'une plane et l'autre cylindrique, est interposé entre l'appendice fixe et une pièce mobile portée par l'autre branche de la chape. Un axe de pivotement avant-arrière traverse les branches de la chape, les mors, l'appendice et la pièce mobile. Un ressort unique prenant appui sur une butée de l'axe repousse ladite pièce, laquelle est guidée dans la chape suivant la direction dudit axe pour presser toutes les portées de frottement les unes contre les autres. Enfin, un dispositif d'indexage est interposé entre le boîtier porte-miroir et l'appendice de l'embase fixe pour que, lors d'un choc, le rétroviseur puisse, par déformation élastique d'un organe du dispositif d'indexage, s'effacer vers l'avant ou vers l'arrière.

Dans ce rétroviseur connu, il est relativement malcommode de régler l'un par rapport à l'autre les efforts de manoeuvre pour le pivotement avant-arrière autour de l'axe par frottement des portées planes et pour le pivotement ciel-terre autour de l'appendice par frottement des portées cylindriques. En effet, pour que l'encombrement du mécanisme interne de pivotement reste dans les limites admissibles, il est nécessaire d'adapter les pièces coopérantes entre elles en intervenant sur la nature des matériaux qui les constituent. La recherche de la fiabilité maximale et du coût minimal s'accomode mal de cet impératif. En outre, il n'est malgré tout pas possible de parvenir à un réglage fin du rapport entre ces efforts.

La présente invention a pour but de remédier à ces inconvénients en proposant des perfectionnements à un rétroviseur de ce type qui comprend :

un boîtier porte-miroir,

une embase fixe destinée à être montée sur le véhicule,

un mécanisme de liaison interposé entre le boîtier et l'embase et comportant des moyens sélectifs de guidage en pivotement dudit boîtier suivant un axe sensiblement vertical avant-arrière et respectivement un axe sensiblement horizontal ciel-terre,

et des portées de frottement conjuguées auxdits moyens de guidage et coopérant avec un moyen élastique pour engendrer des couples de frottement résistants aux pivotements.

Conformément à l'invention, deux ressorts distincts coopèrent respectivement avec au moins une portée de guidage en pivotement ciel-terre et au moins une portée de guidage en pivotement avant-arrière.

L'utilisation de deux ressorts est connue mais pour assurer des fonctions différentes.

Ainsi, la demande de brevet français 2.311.689 montre un rétroviseur comportant une embase et un boîtier dans lequel un miroir est réglable en position avant-arrière et en position ciel-terre. Ce brevet décrit une articulation double reliant le boîtier à l'embase et à travers laquelle s'étend la commande du miroir. L'articulation est conçue pour permettre l'effacement du boîtier lors d'un choc et son indexage en position neutre. Elle comporte deux bossages cylindriques à axe vertical opposant leurs convexité et appliqués contre une entretoise creuse intermédiaire, l'ensemble étant traversé par une douille tubulaire prévue pour le passage de la commande précitée. Un premier ressort est interposé entre un épaulement de la douille et le bossage de l'embase ; un deuxième ressort est interposé entre un écrou de cette douille et le bossage du boîtier.

Les ressorts ne permettent donc pas le réglage du miroir, mais l'effacement du boîtier sous un choc, les nervures desdits bossages et les cannelures de ladite entretoise assurant l'indexage.

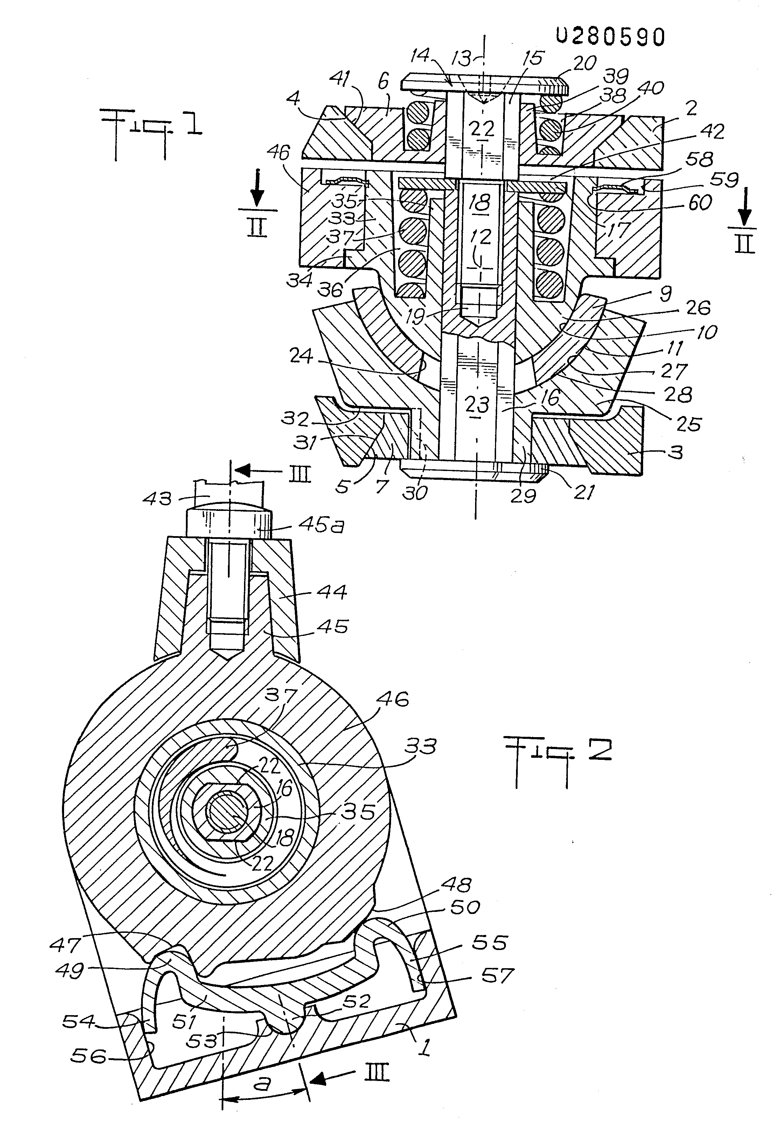

La demande de brevet allemand 1.266.653 montre un rétroviseur comportant une embase sur laquelle est monté un boîtier contenant un miroir fixe. Ainsi que cela ressort de la figure 2, la fonction de réglage avant-arrière et ciel-terre est assurée par une rotule sphérique du boîtier appliquée contre une portée également sphérique de l'embase par un ressort unique. Pour l'effacement en cas de choc, une tige prolongeant la rotule traverse une lumière allongée du boîtier et peut y coulisser. L'indexage est assuré par la pénétration, sous l'action d'un autre ressort, d'un bossage de la rotule dans une cuvette du boîtier.

Le premier ressort permet donc le réglage du miroir dans tous les sens, tandis que le deuxième ressort permet seulement l'effacement en cas de choc et l'indexage.

Dans l'invention, le moyen de guidage en pivotement avant-arrière coopère avec deux portées coniques de frottement, lesquelles sont opposées et présentent des pentes différentes.

Suivant une forme de réalisation particulièrement avantageuse, le rétroviseur comporte un axe de pivotement avant-arrière qui traverse les branches d'une chape du boîtier porte-miroir et un appendice cylindrique de l'embase fixe pour le pivotement ciel-terre. Selon l'invention, l'axe de pivotement comporte :

- outre, d'un côté de l'appendice, une première butée extrême sur laquelle repose un mors fixe cylindrique et un mors fixe conique coopérant respectivement avec ledit appendice fixe et un siège de l'une des branches de la chape

- de l'autre côté de l'appendice,

. d'une part, une deuxième butée extrême sur laquelle prend appui un premier ressort appliqué contre un mors mobile conique coopérant avec un siège de l'autre branche de la chape,

. d'autre part, une butée intermédiaire sur laquelle prend appui un deuxième ressort appliqué contre un mors mobile cylindrique coopérant avec ledit appendice fixe, du jeu étant prévu entre le mors fixe cylindrique et la branche contiguë de la chape, ainsi que le mors fixe conique, également entre le mors mobile conique et la butée intermédiaire de l'axe de pivotement, le deuxième ressort assurant ainsi le serrage des mors cylindriques contre l'appendice fixe pour positionner ciel-terre par rapport à celui-ci l'axe de pivotement, cependant que le premier ressort assure indépendamment le serrage des mors coniques contre les sièges de la chape pour positionner avant-arrière celle-ci par rapport audit axe de pivotement.

Dans le cas où le rétroviseur comporte une bague de commande accouplée au boîtier par l'intermédiaire d'un dispositif d'indexage permettant d'effacer, sous l'effet d'un choc, le rétroviseur vers l'avant ou vers l'arrière, la bague de commande est montée tournante autour du mors mobile cylindrique et immobilisée en translation relativement à ce mors.

Avantageusement, la bague est interposée entre une collerette du mors mobile cylindrique et une rondelle emboîtée dans une gorge dudit mors, la rondelle étant en particulier déformable élastiquement.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin :

    - la figure 1 est une coupe transversale axiale du rétroviseur prise suivant la ligne I-I de la figure 3,

    - la figure 2 est une coupe prise suivant la ligne II-II de la figure 1,

    - la figure 3 est une coupe prise suivant la ligne III-III de la figure 2.

Le rétroviseur comporte un boîtier 1 porte-miroir prolongé par une chape dont les branches 2 et 3 délimitent des orifices coaxiaux bordés vers l'extérieur par des sièges coniques 4 et 5. Ces sièges convergent l'une vers l'autre et coopèrent avec des mors coniques 6 et 7 respectivement.

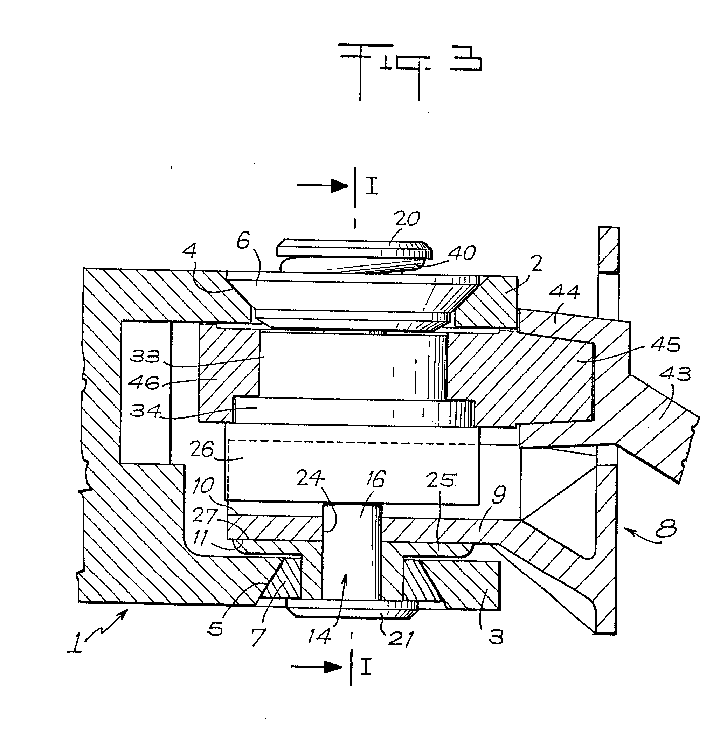

Le rétroviseur comporte également une embase fixe 8 destinée à être montée sur un véhicule, par exemple sur une portière. Cette embase est prolongée par un appendice 9 (figure 3) présentant la forme d'une portion de tube cylindrique dont l'ouverture angulaire est légèrement inférieure à 180 degrés. L'appendice forme alors deux sièges cylindriques 10 et 11 concentriques entre eux et à un axe géométrique 12 s'étendant perpendiculairement à un axe géométrique 13 situé dans le plan de symétrie de cet appendice.

Le montage décrit dans ce qui suit permet de faire coïncider l'axe 13 avec celui des sièges coniques 4 et 5 du boîtier 1. Le rétroviseur comprend en effet un axe matériel 14 constitué par deux parties cylindriques 15 et 16 reliées l'une à l'autre, en pinçant une rondelle 17 formant une butée intermédiaire, par un embout fileté 18 de l'une vissé dans un trou taraudé 19 de l'autre. Ces parties 15 et 16 font corps avec des têtes 20 et 21 respectivement formant des butées extrêmes. En outre, lesdites parties cylindriques 15 et 16 présentent des méplats 22 et 23 afin que les pièces décrites ci-après puissent coulisser sans tourner.

L'axe 14 traverse une lumière 24 de l'appendice fixe 14, grâce à laquelle il peut pivoter autour de l'axe géométrique 12 dudit appendice sans en être empêché par celui-ci. Le rétroviseur comprend, outre cet axe 14, un mors cylindrique fixe 25 et un mors cylindrique mobile 26 présentant respectivement une portée concave 27 et une portée convexe 28 appliquées de part et d'autre contre l'appendice 9.

Le mors cylindrique fixe 25 s'étend en-dessous dudit appendice et est prolongé par un manchon 29. Le mors 25 et le manchon 29 délimitent un alésage de section complémentaire à celle de la partie 16 de l'axe 14 pour pouvoir coulisser le long de celle-ci sans tourner autour.

Le mors conique 7 est monté coulissant le long du manchon 29 et immobilisé en rotation autour de celui-ci par une clavette 30.

Les mors 7 et 25 sont en appui sur la butée extrême 21 et appliqués par leurs portées 31 et 27 respectivement contre les sièges conique 5 de la branche 3 du boîtier et cylindrique 11 de l'appendice 9.

Un jeu 32 est prévu entre ces mors 7 et 25, ainsi qu'entre le mors 25 et la branche 3.

Le mors cylindrique mobile 26 s'étend au-dessus dudit appendice 9 et est prolongé par un fourreau extérieur 33 à collerette saillante 34 et un manchon intérieur 35 délimitant entre eux un chambrage annulaire 36. Ce mors 26 et ce manchon 35 présentent un alésage de section complémentaire à celle de la partie 16 de l'axe 14 pour pouvoir coulisser le long de celle-ci sans tourner autour.

Les mors 25 et 26 sont pressés contre l'appendice 9 par un ressort hélicoïdal 37 prenant appui sur la butée intermédiaire 17 de l'axe 14, ce ressort étant logé dans le chambrage 36.

Le mors conique mobile 6 délimite un chambrage 38 autour d'un manchon central 39 qui présente un alésage de section complémentaire à celle de la partie 15 de l'axe 14 pour pouvoir coulisser le long de celle-ci sans tourner autour. Un ressort 40 est logé dans le chambrage 38 et prend appui sur la butée extrême 20 pour presser la portée 41 du mors conique 6 contre le siège 4 de la branche 2 du boîtier 1 et la portée 31 du mors conique 5 contre le siège 5 de la branche 3 du boîtier 1.

Un jeu 42 est prévu entre le mors conique mobile 6 et la butée intermédiaire 17.

Le rétroviseur ainsi constitué peut être manoeuvré de l'extérieur en agissant sur le boîtier porte-miroir 1 pour le faire pivoter ciel-terre autour de l'axe géométrique 12 de l'appendice 9 de l'embase fixe 8 et/ou avant-arrière autour de l'axe géométrique 13 de l'axe matériel 14. Pour résister à ces pivotements et assurer ainsi la tenue stable du miroir, c'est-à-dire sans déréglage incontrôlé et sans vibrations parasites, les ressorts 37 et 40 engendrent des couples de frottement des mors cylindriques 25, 26 sur l'appendice 9 et des mors coniques 6, 7 sur les branches 2, 3 du boîtier, l'axe 14 assurant la fixité desdits mors 25, 26, 6, 7 relativement à l'appendice 9 et l'indépendance d'action desdits ressorts 37, 40. Dès lors, il est très facile dans un encombrement déterminé du mécanisme et avec des matériaux classiques pour les pièces frottantes, de différencier les couples de frottement et de les adapter aux besoins, simplement en intervenant sur lesdits ressorts et leurs caractéristiques.

Il peut être avantageux que le mors conique 7 assure en prédominance le centrage et le mors conique 6, le serrage. A cet effet, l'angle de pente par rapport à l'axe 13 est plus faible pour le mors 7 que pour le mors 6.

Ce rétroviseur peut aussi être commandé à distance, de l'intérieur du véhicule, au moyen de moteurs électriques, de câbles de traction, d'une manette à prise directe ...

La description qui suit se rapporte à une commande par manette 43 (figures 2 et 3). Celle-ci comporte un chapeau 44 destiné à être emboîté sur une protubérance 45 d'une bague de commande 46 et à y être fixé au moyen d'une vis 45a.

La bague de commande 46 est montée tournante autour du fourreau 33 du mors cylindrique mobile 26 et immobilisée en translation relativement à celui-ci. En particulier, la bague 46 est interposée entre la collerette 34 du mors 26 et une rondelle 58 prenant appui sur le fond d'un logement 59 de la bague et emboîtée dans une gorge 60 dudit fourreau 33. Cette rondelle peut être déformable élastiquement pour supporter les rattrapages de jeu.

La bague 46 présente un cran 47 et un bossage 48 coopérant avec des poussoirs 49 et 50 formés, par cambrage, aux extrémités d'une lame d'indexage 51 déformable élastiquement par flexion en prenant appui en son milieu et à ses extrémités sur le boîtier 1 (figure 2). Cet appui doit être tel que la lame immobilise la bague 46 relativement au boîtier 1 pour que la manette 43 transmette ses pivotements ciel-terre et avant-arrière au boîtier ; mais cet appui doit aussi être tel que la lame bascule pour libérer la bague lors d'un choc sur le boîtier vers l'avant ou vers l'arrière, lequel peut alors pivoter sans entrave hors des limites de manoeuvre de la manette 43. L'appui précité est constitué par un pivot central 52 de la lame, en forme de couteau allongé, placé dans un logement 53 du boîtier et par des ailes extrêmes 54, 55 de ladite lame incurvées concentriquement au pivot et disposées contre des parois 56, 57 dudit boîtier. Lors du choc précité, le poussoir 49 quitte le cran 47 et le poussoir 50 échappe au bossage 48 ; la lame 51 se détend et le boîtier pivote sans contraindre la manette. Pour indexer à nouveau ledit boîtier, il suffit de le faire pivoter à la main en sens inverse avec suffisamment de fermeté pour que les poussoirs 49, 50 franchissent les rampes inclinées qui bordent le cran 47 et le bossage 48 en faisant fléchir la lame 51 et prennent place en fin de course dans ce cran et sur ce bossage.

En intervenant sur la manette 43, on entraîne le boîtier 1 porte-miroir :

- en pivotement avant-arrière autour de l'axe 14 qui se trouve fixé, sous l'action du ressort 37, par les mors cylindriques 25, 26 sur l'appendice 9 de l'embase 8, l'opérateur devant vaincre le couple de frottement engendré par le ressort 40 entre les sièges 4, 5 dudit boîtier et les portées 41, 31 des mors coniques 6, 7 lesquels sont immobilisés en rotation par ledit axe,

- en pivotement ciel-terre autour de l'axe géométrique 12 de l'appendice 9, étant donné que le boîtier se trouve accouplé aux mors cylindriques 25, 26 par l'intermédiaire de l'axe 14 auquel il est relié par les mors coniques 6, 7 considérés dans ce sens de rotation comme fixés aux sièges 4, 5 en raison de la poussée exercée par le ressort 40, l'opérateur devant vaincre pour ce pivotement le couple de frottement engendré par le ressort 37 entre l'appendice 9 et les portées 27, 28 des mors cylindriques 25, 26, lesquels sont immobilisés en rotation par ledit axe.

Les jeux précités 32, 42 et 44 permettent de garantir la fixité de la chape 2, 3 relativement à l'axe 14 et de cet axe relativement à l'appendice, ainsi que l'indépendance d'action des ressorts 37, 40.

## Revendications

1.- Rétroviseur pour véhicules divers, notamment pour véhicule automobile, comprenant :

un boîtier porte-miroir (1),

une embase fixe (8) destinée à être montée sur le véhicule,

un mécanisme de liaison interposé entre le boîtier et l'embase et comportant des moyens sélectifs de guidage en pivotement dudit boîtier suivant un axe (13) sensiblement vertical avant-arrière et respectivement un axe (12) sensiblement horizontal ciel-terre,

et des portées de frottement conjuguées auxdits moyens de guidage et coopérant avec un moyen élastique pour engendrer des couples de frottement résistant aux pivotements,

caractérisé en ce qu'il comporte, pour constituer le moyen élastique, deux ressorts distincts (37, 40) coopérant respectivement avec au moins une portée de guidage (10, 11) en pivotement ciel-terre et au moins une portée (4, 5) de guidage en pivotement avant-arrière.

2.- Rétroviseur selon la revendication 1, caractérisé en ce que le moyen de guidage en pivotement avant-arrière coopère avec deux portées coniques de frottement (4, 5).

3.- Rétroviseur selon la revendication 2, caractérisé en ce que le ressort (40) résistant au pivotement avant-arrière coopère avec les deux portées coniques (4, 5), lesquelles sont opposées et présentent des pentes différentes.

4.- Rétroviseur selon la revendication 3, comportant un axe de pivotement (14) avant-arrière qui traverse les branches (2, 3) d'une chape du boîtier porte-miroir (1) et un appendice cylindrique (9) de l'embase fixe (8) pour le pivotement ciel-terre,

caractérisé en ce que l'axe de pivotement (14) comporte :

- outre, d'un côté de l'appendice (9), une première butée extrême (21) sur laquelle repose un mors fixe cylindrique (25) et un mors fixe conique (7) coopérant respectivement avec ledit appendice fixe (9) et un siège (5) de l'une (3) des branches de la chape,

- de l'autre côté de l'appendice (9),

. d'une part, une deuxième butée extrême (20) sur laquelle prend appui un premier ressort (40) appliqué contre un mors mobile conique (6) coopérant avec un siège (4) de l'autre branche (2) de la chape.

. d'autre part, une butée intermédiaire (17) sur laquelle prend appui un deuxième ressort (37) appliqué contre un mors mobile cylindrique (26) coopérant avec ledit appendice fixe (9), du jeu (32, 42) étant prévu entre le mors fixe cylindrique (25) et la branche contiguë (3) de la chape ainsi que le mors fixe conique (7), également entre le mors mobile conique (6) et la butée intermédiaire (17) de l'axe de pivotement (14), le deuxième ressort (37) assurant ainsi le serrage des mors cylindriques (25, 26) contre l'appendice fixe (9) pour positionner ciel-terre par rapport à celui-ci l'axe de pivotement (14), cependant que le premier ressort (40) assure indépendamment le serrage des mors coniques (6, 7) contre les sièges (4, 5) de la chape (2, 3) pour positionner avant-arrière celle-ci par rapport audit axe de pivotement (14).

5.- Rétroviseur selon la revendication 4, comportant une bague de commande (46) accouplée au boîtier (1) par l'intermédiaire d'un dispositif d'indexage (47 à 57) permettant d'effacer, sous l'effet d'un choc, le rétroviseur vers l'avant ou vers l'arrière, caractérisé en ce que la bague de commande (46) est montée tournante autour du mors mobile cylindrique (26) et immobilisée en translation relativement à ce mors.

6.- Rétroviseur selon la revendication 5, caractérisé en ce que, pour immobiliser la bague (46) en translation, cette bague est interposée entre une collerette (34) du mors mobile cylindrique (26) et une rondelle (58) emboîtée dans une gorge (60) dudit mors, la rondelle étant en particulier déformable élastiquement.

7.- Rétroviseur selon la revendication 4, caractérisé en ce que la pente sur l'axe du mors conique fixe (7) est plus faible que celle du mors conique mobile (6).

Fig.1

U280590

Fig.2

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 311 689 (LAFONT)<br>* Page 2, ligne 33 - page 4, ligne 8; figures 1,2 * | 1 | B 60 R   1/06 |
| A | | 4,5 | |
| X | DE-B-1 266 653 (TALBOT)<br>* Colonne 4, ligne 60 - colonne 5, ligne 23; figure 2 * | 1 | |
| A | | 4-7 | |
| A | PATENT ABSTRACTS OF JAPAN, vol. 10, no. 174 (M-490)[2230], 19 juin 1986; & JP-A-61 24 637 (KOITO SEISAKUSHO K.K.) 03.02.1986 | 1-7 | |
| A | FR-A-2 499 483 (MANZONI BOUCHOT)<br>* Revendication 1; figures 1-3 * | 5 | |

**DOMAINES TECHNIQUES RECHERCHES (Int. Cl.4)**

B 60 R
G 02 B

Le présent rapport a été établi pour toutes les revendications

| Lieu de la recherche | Date d'achèvement de la recherche | Examinateur |
|---|---|---|
| LA HAYE | 02-05-1988 | MAUSSER,T. |